# EUROPEAN PATENT APPLICATION

(11) **EP 4 703 433 A1**
(43) Date of publication of application: **04.03.2026**
(21) Application number: 24796991.8
(22) Date of filing: 23.04.2024
(51) Int. Cl.: C08L 101/00, C08G 73/22, C08J 5/04, C08K 7/02, C08L 79/04

(54) **MOLDED BODY, COMPOSITE MATERIAL, AND METHOD FOR PRODUCING COMPOSITE MATERIAL**

(30) Priority: 28.04.2023 JP 2023075016
(71) Applicant: MITSUBISHI GAS CHEMICAL COMPANY, INC., Chiyoda-ku Tokyo 100-8324 (JP); National University Corporation Okayama University, Kita-ku, Okayama-shi, Okayama 700-8530 (JP)
(72) Inventor: KIRINO Tomoaki, Tokyo 100-8324 (JP); TAKASE Yuki, Tokyo 100-8324 (JP); UCHIDA Tetsuya, Okayama-shi, Okayama 700-8530 (JP); MITSUE Takafumi, Okayama-shi, Okayama 700-8530 (JP)
(74) Representative: Müller-Boré & Partner Patentanwälte PartG mbB
(86) International application number: PCT/JP2024/015819
(87) International publication number: WO 2024/225245

(57) **Abstract**

Provided are a molded article, a composite material for producing the molded article, and a method for producing the composite material. The molded article formed from a composition containing a resin and poly(p-phenylene benzobisoxazole) fiber (X), wherein a proportion of the fiber (X) relative to 100% by mass of poly(p-phenylene benzobisoxazole) contained in the composition is 50% by mass or more.

## Description

### Technical field

The present invention relates to a molded article, a composite material, and method for producing a composite material. In particular, the present invention relates to a molded article using a poly(p-phenylene benzobisoxazole) fiber, and the like.

### Background Art

Conventionally, composite materials that use poly(p-phenylene benzobisoxazole) fiber have been known as one type of fiber-reinforced resin composite material.

Regarding the poly(p-phenylene benzobisoxazole) fiber used in such composite materials, Patent Literature 1 describes that poly(p-phenylene benzobisoxazole) nanofibers can be produced by completely dissolving poly(p-phenylene benzobisoxazole) in sulfuric acid or the like to prepare a solution, and then rapidly cooling this solution at a rate of 0.2 °C/min or more.

Further, Patent Literature 2 discloses a method for producing a composite material by dispersing poly(p-phenylene benzobisoxazole) crystals in a matrix resin, wherein the crystals are formed into bundles by joining poly(p-phenylene benzobisoxazole) nanofibers having a length dimension in the longitudinal direction of 0.01 µm or more and a dimension in a direction perpendicular to the longitudinal direction of from 1 nm to 1 µm parallel to each other in the longitudinal direction and orthogonal to the longitudinal direction. The method described in Patent Literature 2 includes a step of preparing a first solution by dispersing the poly(p-phenylene benzobisoxazole) crystals in a dispersed solution, a step of preparing a second solution by dissolving a matrix resin in the same solution used as the dispersion solution used for the first solution, a step of mixing the first solution with the second solution to prepare a mixed solution in which the poly(p-phenylene benzobisoxazole) crystals are dispersed, and a step of pouring the mixed solution into a predetermined container and drying.

### Citation List

### Patent Literature

Patent Literature 1
   Japanese Patent Laid-Open No. 2015-110854 A
Patent Literature 2
   International Publication No. WO 2016/178427

### Summary of Invention

### Technical Problem

The present inventors studied the method described in Patent Literature 2, and found that a molded article obtained from the composite material tends to undergo thermal expansion. Further investigation into the reason for this revealed that, for example, as shown in Figure 1, the poly(p-phenylene benzobisoxazole) crystals described in Patent Literature 2 are aggregates in which particles of poly(p-phenylene benzobisoxazole) are aggregated to the surface of a poly(p-phenylene benzobisoxazole) fiber, and that a molded article obtained by dispersing such aggregates in a resin tends to undergo thermal expansion.

An object of the present invention is to solve this problem, and to provide a molded article that is resistant to thermal expansion, a composite material for producing the molded article, and a method for producing the composite material.

### Solution to Problem

As a result of investigations conducted by the present inventors in view of the above-described problem, the present inventors found that the above-described problem can be solved by using a poly(p-phenylene benzobisoxazole) fiber (X) obtained by subjecting the poly(p-phenylene benzobisoxazole) aggregate described in Patent Literature 2, for example, to an ultrasonic treatment or the like to remove particles that are on the surface. In particular, the present inventors found that a molded article that is resistant to thermal expansion can be obtained by molding a molded article using the poly(p-phenylene benzobisoxazole) fiber (X) that is partially or entirely covered with a resin.

Specifically, the above-described problem can be solved by the following means.
<1> A molded article formed from a composition including a resin and a poly(p-phenylene benzobisoxazole) fiber (X), wherein a proportion of the fiber (X) relative to 100% by mass of poly(p-phenylene benzobisoxazole) contained in the composition is 50% by mass or more.
<2> The molded article according to <1>, wherein a difference (ΔW) between a maximum fiber width and a minimum fiber width of the fiber (X) is 35 nm or less.
<3> The molded article according to <1>, wherein a difference (ΔW) between a maximum fiber width and a minimum fiber width of the fiber (X) is 30 nm or less.
<4> The molded article according to any one of <1> to <3>, wherein the proportion of the fiber (X) relative to 100% by mass of poly(p-phenylene benzobisoxazole) contained in the composition is 80% by mass or more.
<5> The molded article according to any one of <1> to <4>, wherein the composition contains from 0.01 to 30 parts by mass of the fiber (X) relative to 100 parts by mass of the resin.
<6> The molded article according to any one of <1> to <5>, wherein the molded article is a film.
<7> The molded article according to <6>, wherein the fiber (X) is oriented in an in-plane direction of the film.
<8> The molded article according to any one of <1> to <7>, wherein
   a difference (ΔW) between a maximum fiber width and a minimum fiber width of the fiber (X) is 30 nm or less,
   the proportion of the fiber (X) relative to 100% by mass of poly(p-phenylene benzobisoxazole) contained in the molded article is 80% by mass or more,
   the composition contains from 0.01 to 30 parts by mass of the fiber (X) relative to 100 parts by mass of the resin,
   the molded article is a film, and
   the fiber (X) is oriented in an in-plane direction of the film.
<9> A composite material including a poly(p-phenylene benzobisoxazole) fiber (X) and a resin that covers all or a part of the fiber (X), wherein
   a proportion of the fiber (X) relative to 100% by mass of poly(p-phenylene benzobisoxazole) contained in the composite material is 50% by mass or more.
<10> The composite material according to <9>, wherein a difference (ΔW) between a maximum fiber width and a minimum fiber width of the fiber (X) is 35 nm or less.
<11> The composite material according to <9>, wherein a difference (ΔW) between a maximum fiber width and a minimum fiber width of the fiber (X) is 30 nm or less.
<12> The composite material according to any one of <9> to <11>, wherein the proportion of the fiber (X) relative to 100% by mass of poly(p-phenylene benzobisoxazole) contained in the composite material is 80% by mass or more.
<13> The composite material according to any one of <9> to <12>, wherein the composite material contains from 100 to 9900 parts of the resin relative to 100 parts by mass of the fiber (X).
<14> The composite material according to any one of <9> to <13>, wherein
   a difference (ΔW) between a maximum fiber width and a minimum fiber width of the fiber (X) is 30 nm or less,
   the proportion of the fiber (X) relative to 100% by mass of poly(p-phenylene benzobisoxazole) contained in the composite material is 80% by mass or more, and
   the composite material contains from 100 to 9900 parts of the resin relative to 100 parts by mass of the fiber (X).
<15> A method for producing the composite material according to any one of <9> to <14>, including:
   a step of ultrasonically treating a poly(p-phenylene benzobisoxazole) aggregate in a solvent;
   a step of separating a poly(p-phenylene benzobisoxazole) fiber (X) from the ultrasonically treated liquid to obtain a dispersion of the poly(p-phenylene benzobisoxazole) fiber (X);
   a step of mixing the dispersion with a resin to obtain a mixed liquid containing the poly(p-phenylene benzobisoxazole) fiber (X), the resin, and the solvent; and
   a step of removing the solvent from the mixed liquid.
<16> The method for producing the composite material according to <15>, wherein a content of the resin in 100% by mass of the mixed liquid is from 0.05 to 50% by mass.
<17> A method for producing a molded article, including:
   a step of ultrasonically treating a poly(p-phenylene benzobisoxazole) aggregate in a solvent;
   a step of separating a poly(p-phenylene benzobisoxazole) fiber (X) from the ultrasonically treated liquid to obtain a dispersion of the poly(p-phenylene benzobisoxazole) fiber (X);
   a step of mixing the dispersion with a thermosetting resin to obtain a mixed liquid containing the poly(p-phenylene benzobisoxazole) fiber (X), the thermosetting resin, and the solvent;
   a step of removing the solvent from the mixed liquid; and
   a step of curing the thermosetting resin.
<18> The method for producing a molded article according to <17>, wherein the thermosetting resin is soluble in the solvent contained in the dispersion at 23°C.
<19> A mat formed by using poly(p-phenylene benzobisoxazole) including a poly(p-phenylene benzobisoxazole) fiber (X),
   wherein a proportion of the fiber (X) relative to 100% by mass of poly(p-phenylene benzobisoxazole) contained in the mat is 50% by mass or more.
<20> The mat according to <19>, wherein a difference (ΔW) between a maximum fiber width and a minimum fiber width of the fiber (X) is 35 nm or less.
<21> The mat according to <19>, wherein a difference (ΔW) between a maximum fiber width and a minimum fiber width of the fiber (X) is 30 nm or less.
<22> The mat according to any one of <19> to <21>, wherein the proportion of the fiber (X) relative to 100% by mass of poly(p-phenylene benzobisoxazole) contained in the mat is 80% by mass or more.

### Advantageous Effects of Invention

With the present invention, a molded article that is resistant to thermal expansion, a composite material for producing the molded article, and a method for producing the composite material can be provided.

### Brief Description of Drawings

[Figure 1] Figure 1 is a photograph taken with an electron microscope of an example of an aggregate in which particles of poly(p-phenylene benzobisoxazole) are attached to the surface of a poly(p-phenylene benzobisoxazole) fiber.
[Figure 2] Figure 2 is a conceptual diagram of during an ultrasonic treatment of a poly(p-phenylene benzobisoxazole) aggregate.
[Figure 3] Figure 3 is a photograph taken with an electron microscope of one of the poly(p-phenylene benzobisoxazole) fiber (X) obtained in Example 1.
[Figure 4] Figure 4 shows a distribution of the fiber width of the fibers obtained in Example 1 and Comparative Example 1.
[Figure 5] Figure 5 shows a distribution of a difference (ΔW) between a maximum fiber width and a minimum fiber width of the fibers obtained in Example 1 and Comparative Example 1.
[Figure 6] Figure 6 shows a distribution of the length of the fibers obtained in Example 1 and Comparative Example 1.
[Figure 7] Figure 7 shows a distribution of the aspect ratio of the fibers obtained in Example 1 and Comparative Example 1.
[Figure 8] Figure 8 shows the observation results of scanning probe microscopy (SPM) of the molded article obtained in Example 1.
[Figure 9] Figure 9 shows the observation results of scanning probe microscopy (SPM) of the molded article obtained in Example 3.
[Figure 10] Figure 10 shows X-ray diffraction measurement results when X-rays are incident from the in-plane direction of a mat of the PBO fiber (X).

### Description of Embodiments

A mode for carrying out the present invention (hereinafter, simply referred to as "this embodiment") will now be described in detail. It is noted that this embodiment is an illustrative example for describing the present invention, and the present invention is not limited to only this embodiment.

In addition, in this specification, the meaning of "from ... to" includes the numerical values described before and after "... " as a lower limit value and an upper limit value.

In this specification, the various physical property values and characteristic values are assumed to be values as of 23°C, unless otherwise stated.

In this specification, the term "step" not only includes independent steps, but as long as the intended effect of the step is achieved, also includes steps that cannot be clearly distinguished from another step.

In this specification, film refers to a molded article that is thin relative to its length and width, and is generally flat. Further, in this specification, "film" is used in a sense that includes "sheet", and may be either single-layer or multi-layer, although single-layer is preferable.

If the measurement methods and the like described in the standards shown in this specification differ from year to year, unless otherwise stated, those measurement standards shall be based on the standards as of January 1, 2023.

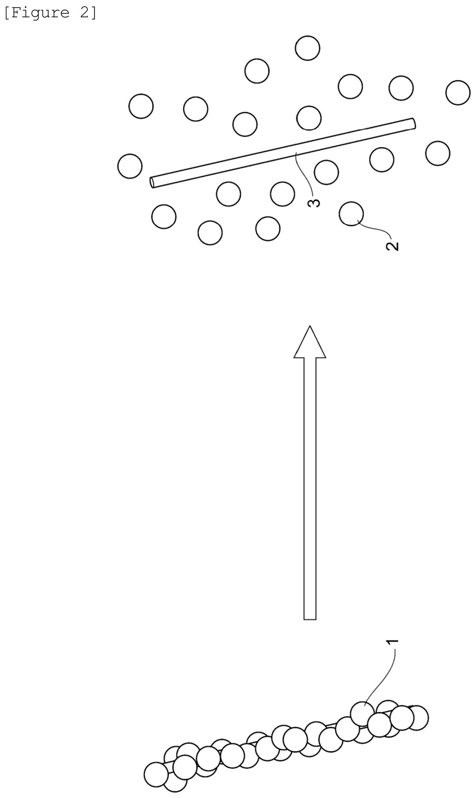

Figure 2 may be different from the actual case.

The molded article of this embodiment is a molded article formed from a composition containing a resin and poly(p-phenylene benzobisoxazole) fiber (X), wherein a proportion of the fiber (X) relative to 100% by mass of poly(p-phenylene benzobisoxazole) contained in the composition is 50% by mass or more. By adopting such a configuration, it is possible to provide a molded article that is resistant to thermal expansion. In a poly(p-phenylene benzobisoxazole) (hereinafter sometimes abbreviated as "PBO") aggregate, particles are attached to the surface of a PBO fiber. In this embodiment, it is inferred that a remarkable suppression of thermal expansion of the molded article is achieved by using a PBO fiber (X) from which particles have been removed from the PBO aggregate to produce the molded article.

In the molded article of this embodiment, it is inferred that thermal diffusion is possible because the PBO fiber (X) can be sufficiently dispersed in the resin. In other words, it is inferred that since the PBO fiber (X) usually has a higher thermal conductivity than the resin, by forming the PBO fiber (X) so that the fiber paths are connected in a mesh-like manner, heat can be diffused more easily.

Further, the molded article of this embodiment tends to suppress thermal expansion more easily. This is inferred to be because, in the molded article of this embodiment, the PBO fiber (X) and the resin are bonded with good compatibility. That is, when a resin molded article is heated, the resin tends to flow, although this does depend on the type of resin. In the multilayered article of this embodiment, it is inferred that because the resin is bonded to the PBO fiber (X), which is resistant to expansion, thermal expansion during heating can be effectively suppressed.

PBO (poly(p-phenylene-2,6-benzobisoxazole)) is a compound having the following constituent unit, and usually, 90% by mass or more (preferably 95% by mass or more) of the constituent units have the following structure.

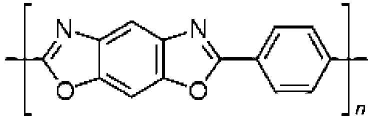

The weight average molecular weight of the above PBO is determined from the intrinsic viscosity measured using a viscometer, and is preferably 10000 or more, and preferably 100000 or less.

The proportion of the PBO fiber (X) relative to 100% by mass of poly(p-phenylene benzobisoxazole) contained in the composition is 50% by mass or more, preferably 60% by mass or more, more preferably 70% by mass or more, further preferably 80% by mass or more, and much more preferably 90% by mass or more. The upper limit may be 100% by mass.

Further, a difference (ΔW) between the maximum width and the minimum width of the PBO fiber (X) is preferably 35 nm or less, and more preferably 30 nm or less. The lower limit value of the difference (ΔW) between the maximum width and the minimum width of a single fiber is ideally 0 nm, but in practice it is more than 0 nm. The width of the fiber means the length in the direction perpendicular to the fiber length (longitudinal direction) of the fiber. Specifically, the width is a value measured according to the method described in the Examples later.

In this embodiment, the PBO fiber (X) is preferably not in the form of bundles or clumps, and is preferably a single fiber (an individual fiber). Further, the fiber (X) in this embodiment is preferably a nanofiber. Nanofibers are difficult to produce by melt spinning. This embodiment is beneficial in that such a nanofiber can be obtained.

The PBO fiber (X) can be obtained, for example, by ultrasonically treating a PBO aggregate and separating the PBO fiber (X). Figure 2 is a conceptual diagram of a step of obtaining a PBO fiber (X) by ultrasonically treating a PBO aggregate. That is, when a PBO aggregate 1 is ultrasonically treated, particles 2 adhering to the surface of the PBO aggregate 1 separate from a PBO fiber (X) 3. Then, in this separated state, the PBO fiber (X) 3 can be separated by filtration or the like. A method for separating the PBO fiber (X) will be described later.

As described above, the molded article of this embodiment is formed from a composition containing a resin and a poly(p-phenylene benzobisoxazole) fiber (X). The content of the PBO fiber (X) in this composition is, relative to 100 parts by mass of the resin, more preferably 0.01 parts by mass or more, further preferably 0.025 parts by mass or more, much more preferably 0.05 parts by mass or more, and still much more preferably 0.10 parts by mass or more. When the content is equal to or more than the above lower limit value, a molded article that is resistant to thermal expansion tends to be obtained. An upper limit value of the content of the resin is, the PBO fiber (X) in the composition (i.e., molded article) is, relative to 100 parts by mass of the resin, preferably 30 parts by mass or less, more preferably 25 parts by mass or less, further preferably 20 parts by mass or less, much more preferably 15 parts by mass or less, and still much more preferably 10 parts by mass or less. When the content is equal to or less than the above upper limit value, a molded article having a high elastic modulus tends to be obtained.

Of the PBO contained in the composition, the total amount of non-fibrous PBO (i.e., PBO that is an aggregate or a particle) is, in 100% by mass of the PBO contained in the composition, preferably 40% by mass or less, more preferably 30% by mass or less, much more preferably 20% by mass or less, and still much more preferably 10% by mass or less. The lower limit value may be 0% by mass.

The PBO fiber (X) contained in the composition preferably has a length in the longitudinal direction (fiber length) of 1 µm or more, and more preferably 1.5 µm or more, and preferably 5 µm or less, and more preferably 4 µm or less.

Further, the PBO fiber (X) contained in the composition preferably has a length in the direction perpendicular to the longitudinal direction (fiber width) of 50 nm or more, and more preferably 60 nm or more, and preferably 150 nm or less, and more preferably 130 nm or less.

The PBO fiber (X) contained in the composition preferably has an aspect ratio of 50 or less, and more preferably 10 or more.

The fiber length, fiber width, and aspect ratio of the PBO fiber (X) are the median values of any 20 to 25 fibers separated from the composition.

The PBO fiber (X) in this embodiment can be used as a mat. Specifically, a mat formed using poly(p-phenylene benzobisoxazole) that includes a poly(p-phenylene benzobisoxazole) fiber (X), wherein a proportion of the fiber (X) relative to 100% by mass of poly(p-phenylene benzobisoxazole) contained in the mat is 50% by mass or more is disclosed. The size of the PBO fiber (X) in the mat, the proportion of the PBO fiber (X) contained in the mat, and the like are the same as for the molded article described above, and the preferred ranges are also the same.

The mat can be obtained by dispersing the PBO fiber (X) in a dispersion medium (e.g., water), removing the dispersion medium, and then pressing into a mat shape. The proportion of the PBO fiber (X) in the dispersion medium is preferably from 0.0001 to 99% by mass. Further, the dispersion medium is preferably removed by filtration.

The molded article of this embodiment can be produced, for example, by directly blending the PBO fiber (X) into the resin. As used herein, resin is intended to mean not only thermoplastic resins, but also components that cure through a polymerization reaction, and includes, for example, thermosetting oligomers and low molecular weight thermosetting compounds.

The method of producing the molded article by directly blending the PBO fiber (X) into a resin is preferably used when the resin is a thermosetting resin, and in particular, is preferably used when the resin dissolves in a solvent or is a liquid at room temperature (e.g., 23°C).

That is, one example of the method for producing the molded article of this embodiment includes a step of ultrasonically treating a PBO aggregate in a solvent, a step of separating a PBO fiber (X) from the ultrasonically treated liquid to obtain a dispersion of the PBO fiber (X), a step of mixing the dispersion with a thermosetting resin to obtain a mixed liquid containing the PBO fiber (X), the thermosetting resin, and the solvent, a step of removing the solvent from the mixed liquid, and a step of curing the thermosetting resin. In this embodiment, it is preferable that the thermosetting resin is soluble in the solvent contained in the dispersion at 23°C. The solvent used when ultrasonically treating the PBO aggregate and the solvent contained in the dispersion of the PBO fiber (X) may be the same or different. The resin that dissolves in the solvent is not particularly limited, and examples thereof include a thermosetting resin. A thermosetting polyimide resin, an epoxy resin, a phenolic resin, a thermosetting polyester resin, a melamine resin, a vinyl ester resin, and a cyanate resin are more preferable, and an epoxy resin is further preferable.

When a thermosetting resin is used, it is preferable to further contain a curing accelerator such as imidazole. The curing accelerator is not particularly limited, and examples thereof include curing accelerators that are generally used in resin compositions for electronic materials. Details regarding the curing accelerator may be found in the description in paragraphs [0195] to [0196] of International Publication No. WO 2024/034276, the contents of which are incorporated herein by reference.

The content of the curing accelerator, if contained, is, based on the mass of the composition or molded article, for example, 0.001% by mass or more and, for example, 10% by mass or less, and preferably 5% by mass or less.

Another example of a method for producing the molded article of this embodiment is to produce the molded article by, rather than using a PBO aggregate, using a composite material in which all or a part of the PBO fiber (X) is covered with a resin. That is, in this embodiment, it is preferable to use a composite material containing the PBO fiber (X) and a resin that covers all or a part of the fiber (X), in which the proportion of the fiber (X) relative to 100% by mass of poly(p-phenylene benzobisoxazole) contained in the composite material is 50% by mass or more.

Thus, a molded article in which the PBO fiber (X) is appropriately oriented and in which thermal expansion is effectively suppressed can be obtained by molding that uses a composition in which a resin (a post-added resin described later) has been further blended into a composite material in which PBO particles are separated from the PBO aggregate and in which all or a part of the PBO fiber (X) is covered with a resin. In particular, when the molded article is a film, the fiber (X) can be oriented in the in-plane direction of the film, and thermal expansion can be further effectively suppressed.

Such a method for producing a molded article via a composite material is preferably used when the resin is a thermoplastic resin. The thermoplastic resin is preferably a polycarbonate resin, a polyolefin resin, a styrene resin, an acrylic resin, a thermoplastic polyester resin, a thermoplastic polyimide resin, a polyacetal resin, a polyamide resin, a polyphenylene ether resin, or a polyamideimide resin, and more preferably a polycarbonate resin.

The PBO fiber (X) contained in the above-described composite material is synonymous with the PBO fiber (X) contained in the above composition. Therefore, the size (width, etc.) of the fiber (X) contained in the composite material and the proportion of the PBO fiber (X) relative to a total of 100% by mass of PBO are the same as for the composition described above, and the preferred ranges are also the same.

On the other hand, in the composite material, it is sufficient that the resin is present in an amount sufficient to cover all or a part of the PBO fiber (X). Specifically, the content of the resin in the composite material is, relative to 100 parts by mass of the PBO fiber (X), more preferably 100 parts by mass or more, further preferably 150 parts by mass or more, much more preferably 200 parts by mass or more, and still much more preferably 233 parts by mass or more. When the content is equal to or more than the above lower limit value, the PBO fiber (X) tend to be easily dispersed in the molded article when the molded article is produced. Further, an upper limit value of the content of the resin is, relative to 100 parts by mass of the PBO fiber (X), preferably 9900 parts by mass or less, more preferably 3233 parts by mass or less, further preferably 1900 parts by mass or less, much more preferably 900 parts by mass or less, and still much more preferably 233 parts by mass or less. When the content is equal to or less than the above lower limit value, the amount of the PBO fiber (X) in the molded article tends to be easily controlled.

The composite material of this embodiment may contain only one type of resin, or may contain two or more types. When two or more types are contained, it is preferable that the total amount is in the above ranges.

Further, of the composite material of this embodiment, the total of the resin and the PBO fiber (X) usually accounts for 95% by mass or more, preferably 97% by mass or more, preferably 99% by mass or more, and may be 100% by mass.

The resins used in this embodiment, namely, for example, the resin contained in the composite material and the resin contained in the composition other than the resin constituting the composite material (hereinafter sometimes referred to as "post-added resin"), may each be a thermoplastic resin or a thermosetting resin, but a thermoplastic resin is preferred.

Examples of the thermoplastic resin include a polycarbonate resin, a polyolefin resin, a styrene resin, an acrylic resin, a thermoplastic polyester resin, a thermoplastic polyimide resin, a polyacetal resin, a polyamide resin, a polyphenylene ether resin, and a polyamideimide resin, and a polycarbonate resin is preferred.

Examples of the thermosetting resin include a thermosetting polyimide resin, an epoxy resin, a phenolic resin, a thermosetting polyester resin, a melamine resin, a vinyl ester resin, and a cyanate resin, and an epoxy resin is preferred.

Further, a photocurable resin and a polymerizable compound that polymerizes with a catalyst such as a (meth)acrylate can also be used.

Only one type or two or more types of each of the resins used in this embodiment, for example, the resin contained in the composite material and the post-added resin, may be contained.

In this embodiment, the resin contained in the composite material and the post-added resin may be the same or different. In one example of this embodiment, the resin contained in the composite material and the post-added resin preferably have 80% by mass or more in common, more preferably 85% by mass or more in common, further preferably 90% by mass or more in common, and may have 100% by mass in common.

The composition or molded article in this embodiment may, within the spirit of this embodiment, contain other components in addition to the resin and the PBO fiber (X).

Specific examples include a mold release agent, a colorant, a stabilizer (such as a heat stabilizer and an antioxidant), a flame retardant, a flame retardant aid, an anti-dripping agent, an ultraviolet absorbent, a fluorescent brightener, an impact resistance improver, an anti-fogging agent, a flow improver, a plasticizer, a dispersing agent, an antibacterial agent, an antiviral agent, and the like. Details of these components may be found in the descriptions in paragraphs [0107] to [0115] of Japanese Patent Laid-Open No. 2014-136710 A, paragraphs [0106] to [0128] of Japanese Patent Laid-Open No. 2015-117298 A, and paragraphs [0055] to [0061] of Japanese Patent Laid-Open No. 2018-095706 A, the contents of which are incorporated herein by reference.

The content of other components, when contained, is, based on the mass of the composition or molded article, for example, 0.001% by mass or more, and, for example, 5% by mass or less, preferably 3% by mass or less, and more preferably 1% by mass or less.

Further, of the composition or molded article of this embodiment, the total of the resin and the PBO fiber (X) usually accounts for 95% by mass or more, preferably 97% by mass or more, preferably 99% by mass or more, and may be 100% by mass.

Next, a method of separating the PBO fiber (X), producing the composite material of this embodiment, and producing the molded article of this embodiment using the composite material will be described.

In this embodiment, the composite material is preferably obtained by a method that includes a step of ultrasonically treating a poly(p-phenylene benzobisoxazole) aggregate in a solvent, a step of separating a poly(p-phenylene benzobisoxazole) fiber (X) from the ultrasonically treated liquid to obtain a dispersion of the poly(p-phenylene benzobisoxazole) fiber (X), a step of mixing the dispersion with a resin to obtain a mixed liquid containing the poly(p-phenylene benzobisoxazole) fiber (X), the resin, and the solvent, and a step of removing the solvent from the mixed liquid. In this way, the PBO fiber (X) is separated, and then mixed with the resin to produce a molded article using a PBO fiber (X) master batch, thereby obtaining a molded article in which thermal expansion is suppressed.

The solvent used in the ultrasonic treatment is not particularly limited as long as it is a solvent that can effectively disperse the PBO fiber (X), and may be an organic solvent or an inorganic solvent. One example of the solvent is water.

The PBO aggregate can be produced by a known method, for example, by the method for producing poly(p-phenylene benzobisoxazole) crystals described in the above-mentioned Patent Literature 2 (International Publication No. WO 2016/178427).

In this embodiment, it is preferable to separate the PBO fiber (X) from the ultrasonically treated liquid to obtain a dispersion of the PBO fiber (X). The method for separating the PBO fiber (X) from the ultrasonically treated liquid is not particularly limited, and any method capable of separating the PBO fiber (X) and the PBO particles can be used. Specifically, examples of methods for separating the PBO fiber (X) include filtration, sieving, air classification, and vibration classification, and filtration is preferred. The PBO fiber (X) obtained here is usually the same as the PBO fiber (X) contained in the above-mentioned composition.

In this embodiment, the poly(p-phenylene benzobisoxazole) fiber (X) is separated from the ultrasonically treated liquid to obtain a dispersion of the poly(p-phenylene benzobisoxazole) fiber (X). The dispersion usually contains the PBO fiber (X) and a solvent, in which 95% by mass or more (preferably 97% by mass or more, more preferably 99% by mass or more, and for example, 100% by mass or less) of the dispersion is preferably the PBO fiber (X) and the solvent. The solvent of the dispersion is not particularly limited as long as the solvent can effectively disperse the PBO fiber (X). The solvent may be an organic solvent or an inorganic solvent. One example of the solvent is tetrahydrofuran.

This embodiment includes a step of mixing a resin with the dispersion of the PBO fiber (X) to obtain a mixed liquid containing the poly(p-phenylene benzobisoxazole) fiber (X), the resin, and the solvent. By producing such a mixed liquid, it is possible to cover all or a part of the PBO fiber (X) with the resin. The type of resin added to the dispersion of the PBO fiber (X) and the amount of resin added to the PBO fiber (X) are the same as for the composite material described above.

A first embodiment for obtaining the mixed liquid is to directly add the resin to the dispersion of the PBO fiber (X). In this embodiment, it is preferable to crush the resin into a powder and add the resin as a crushed power, or to use a liquid resin when mixing.

A second embodiment for obtaining the mixed liquid is to mix a dispersion of a resin with the dispersion of the PBO fiber (X). The resin dispersion in this embodiment can be determined according to the type of resin, and is preferably selected from the above-described examples of the solvent used during the ultrasonic treatment. The solvent used for the dispersion of the PBO fiber (X) and the solvent used for the dispersion of the resin may be the same or different. In particular, it is preferable to mix the resin with the dispersion while dissolved in the solvent. By adopting such a configuration, it is possible to more easily cover the surface of the PBO fiber (X) with the resin. For the second embodiment, the descriptions in International Publication No. WO 2016/178427 can be referred to.

In this embodiment, the content of the PBO fiber (X) in 100% by mass of the mixed liquid is preferably 0.0001% by mass or more, more preferably 0.0005% by mass or more, further preferably 0.001% by mass or more, much more preferably 0.003% by mass or more, still much more preferably 0.005% by mass or more, and may be 0.01% by mass or more, 0.03% by mass or more, or 0.05% by mass. When the content is equal to or more than the above lower limit value, the composite material tends to be obtained efficiently. In addition, an upper limit value of the content of the PBO fiber (X) in 100% by mass of the mixed liquid is preferably 30% by mass or less, more preferably 10% by mass or less, further preferably 5% by mass or less, much more preferably 3% by mass or less, and still much more preferably 1% by mass or less. When the content is equal to or less than the above upper limit value, there is a tendency for the resin to cover the surface of the PBO fiber (X) more effectively while suppressing aggregation of the PBO fiber (X).

The content of the resin in 100% by mass of the mixed liquid is preferably 50% by mass or less, more preferably 40% by mass or less, further preferably 30% by mass or less, much more preferably 20% by mass or less, and still much more preferably 10% by mass or less. When the content is equal to or less than the above upper limit value, the viscosity of a mixed liquid that is suitable for dispersing the PBO fiber (X) is maintained, and the advantageous effect that the surface of the PBO fiber (X) can be efficiently covered with the resin tends to be further improved.

The lower limit of the content of the resin in 100% by mass of the mixed liquid is preferably 0.05% by mass or more, more preferably 0.1% by mass or more, further preferably 0.5% by mass or more, much more preferably 1% by mass or more, and still much more preferably 5% by mass or more. When the content is equal to or more than the above lower limit value, the advantageous effect that a composite material can be efficiently obtained tends to be further improved.

The mixed liquid of this embodiment may contain only one type of resin, or may contain two or more types. When two or more types are contained, it is preferable that the total amount is in the above ranges.

The PBO fiber (X), the solvent, and the resin preferably account for from 98 to 100% by mass of the mixed liquid used in this embodiment.

In this embodiment, the composite material is obtained through a step of removing the solvent from the mixed liquid. By removing the solvent, in the mixed liquid, a composite material is obtained in which all or a part of the PBO fiber (X) is covered with the resin. This composite material is synonymous with the composite material described above.

The step of removing the solvent from the mixed liquid is not particularly limited, but is preferably performed by heating to volatilize the solvent, and more preferably by thermal vacuum drying.

The obtained composite material may also be washed with a solvent.

In this embodiment, as described above, it is preferable to produce the molded article using the composite material obtained above. More preferably, it is preferable to form the molded article from a composition containing a resin and the composite material. The resin referred to here is the post-added resin described above.

In the above-described composition, the ratio between the post-added resin and the composite material is, relative to 100 parts by mass of the post-added resin, preferably 10 parts by mass or more, and more preferably 30 parts by mass or more, and preferably 200 parts by mass or less, and more preferably 100 parts by mass or less.

The molded article of this embodiment is preferably formed from a composition containing the resin and the composite material, and examples of the molding method include extrusion molding, cast molding, injection molding, and the like.

The shape of the molded article of this embodiment is not particularly specified, but an example is a film.

Examples of the uses of the molded article can be found in the descriptions in paragraph [0044] of Japanese Patent Laid-Open No. 2016-089169 A and paragraph [0028] of Japanese Patent Laid-Open No. 2009-242810 A, the contents of which are incorporated herein by reference.

### Examples

The present invention will now be described in more detail with reference to examples. The materials, amounts used, proportions, processing details, processing procedures, and the like indicated in the following examples may, within the spirit of the present invention, be changed as appropriate. Therefore, the scope of the present invention is not limited to the specific examples shown below.

In cases where the measurement equipment used in the examples is difficult to obtain due to discontinuation or the like, other equipment with equivalent performance can be used for the measurements.

### Example 1

### <Production of PBO aggregate>

PBO (synthesized by condensation polymerization of 4,6-diaminoresorcinol and terephthalic acid using polyphosphoric acid as a polymerization catalyst, weight average molecular weight 16600) was dissolved in 94.5% by mass sulfuric acid under a nitrogen atmosphere at 120°C to a concentration of 0.1% by mass. The resultant solution was rapidly cooled in an ice bath at 0°C and then added dropwise into distilled water at 0°C for rapid crystallization to obtain a PBO aggregate. The obtained PBO aggregate was washed to prepare an aqueous dispersion (0.003% by mass) of the PBO aggregate.

### <Production of the PBO fiber (X)>

The aqueous dispersion of the PBO aggregate was homogenized for 1 hour. The resultant aqueous dispersion was irradiated with ultrasonic waves at a frequency of 42 kHz to separate the PBO into fibrous matter and particles. When the morphology of the PBO in the aqueous dispersion was observed using a scanning electron microscope (SEM), it was confirmed that the PBO aggregate had been separated into PBO fibers and PBO particles.

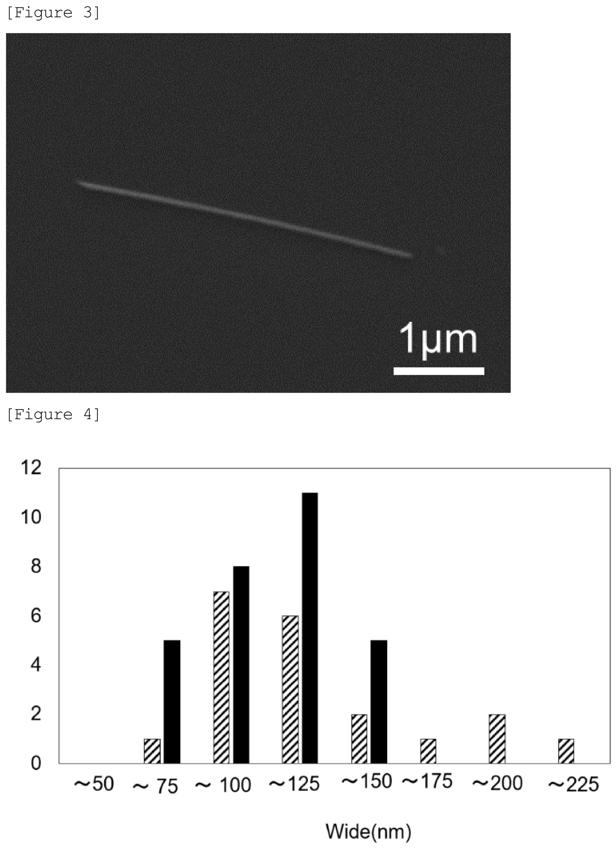

In addition, the aqueous dispersion after ultrasonic irradiation was filtered using a membrane filter (diameter 1.0 µm) to obtain the PBO fiber (X). The particles passed through the filter, and the fibrous matter was filtered onto the filter. Figure 3 shows a photograph of the PBO fiber (X).

Among the obtained PBO fibers (X), the fibers (X) that were not entangled with other fibers and for which a clear SEM image could be obtained were measured, and the width, difference (ΔW) between the maximum fiber width and minimum fiber width, and fiber length were determined. In the present invention, the width and fiber length of at least 10 or more PBO fibers (X) are measured, but, for example, all the PBO fibers (X) that are not entangled with other fibers and for which a clear SEM image can be obtained when observed with an SEM may be measured. That is, the width and length in this embodiment refer to the width and length of the fiber measured in the SEM image.

The results are shown in Table 1 and Figures 4 to 7 below.

Figure 4 shows the distribution of fiber widths, with the horizontal axis representing the width (nm). "Up to 50" means that the width is 50 nm or less, "up to 75" indicates that the width is more than 50 nm and 75 nm or less, and the same is applied for the other widths. The vertical axis represents the number of fibers that fall into each width range.

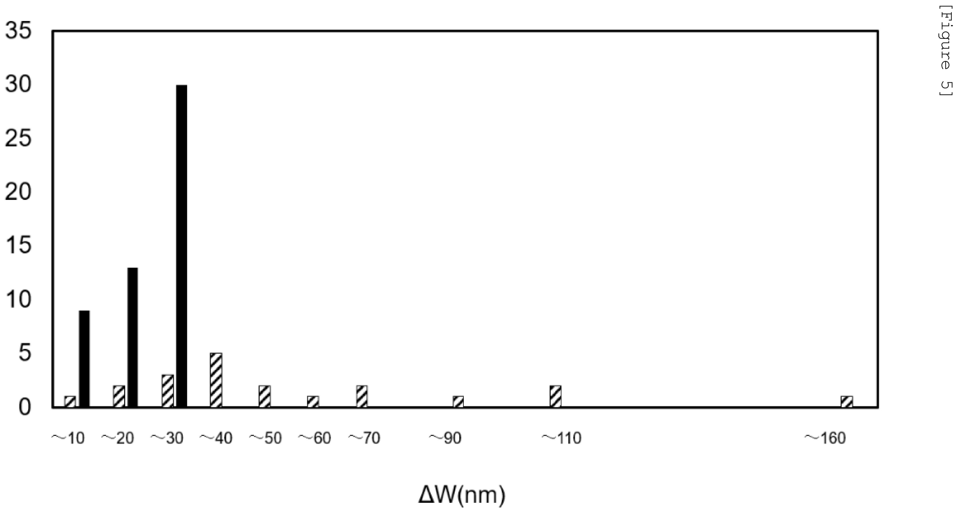

Figure 5 shows the distribution of the difference (ΔW) between the maximum fiber width and minimum fiber width, with the horizontal axis representing the difference (ΔW) between the maximum and minimum widths (unit: nm). "Up to 10" means that ΔW is 10 nm or less, "up to 20" means that ΔW is more than 10 nm and 20 nm or less, and the same is applied for the others. The vertical axis represents the number of fibers that fall into each ΔW range.

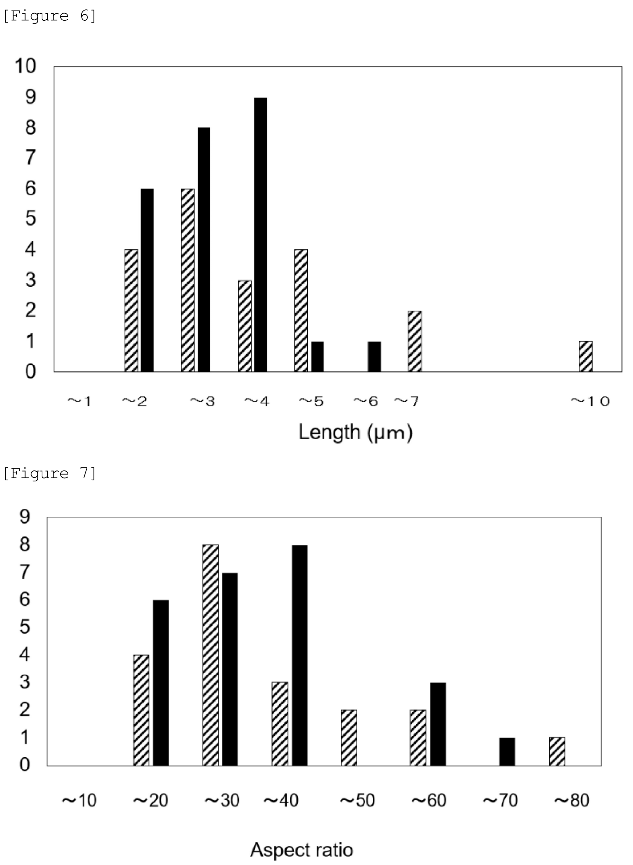

Figure 6 shows the distribution of fiber lengths, with the horizontal axis representing length (unit: µm). "Up to 1" means that the length is 1 µm or less, "up to 2" means that the length is more than 1 µm and 2 µm or less, and the same is applied for the others. The vertical axis represents the number of fibers that fall into each length range.

Figure 7 shows the aspect ratio of the fibers, with the horizontal axis representing the aspect ratio. "Up to 10" means that the aspect ratio is 10 or less, "up to 20" means that the aspect ratio is more than 10 and 20 or less, and the same is applied for the others. The vertical axis represents the number of fibers exhibiting each aspect ratio.

The same is shown for Comparative Example 1. Note that in Figures 4 to 7, the solid black areas represent the distribution for Example 1, and the hatched areas represent Comparative Example 1.

### <Production of composite material (master batch)>

The above purified PBO fiber (X) was added to tetrahydrofuran (THF) so that the concentration of the PBO fiber (X) was 0.005% by mass, and dispersed using ultrasonic irradiation (frequency 42 kHz). Powdered polycarbonate resin (Mitsubishi Engineering Plastics Corporation, product number: Iupilon E-2000) was added to the dispersion so that the mass ratio of the PBO fiber (X) to the polycarbonate resin was 100:1, and dissolved at 60°C. The dispersion in which the polycarbonate resin was dissolved was left to stand until it reached room temperature, then distilled water was added dropwise to cause the polycarbonate resin to precipitate, whereby a PBO fiber (X) at least partially covered with the polycarbonate resin was obtained. The obtained PBO fiber (X) at least partially covered with the polycarbonate resin was washed with THF and distilled water, and then heat-dried under vacuum to produce a composite material (PBO fiber (X) at least partially covered with the polycarbonate resin, master batch).

### <Production of molded article of polycarbonate resin/PBO fiber (X)>

Using a micro-type high-shear molding machine (IMC-11FD, manufactured by Imoto Machinery Co., Ltd.), a powder of a polycarbonate resin (Mitsubishi Engineering Plastics Corporation, product number: Iupilon E-2000) was added so that the concentration of the composite material (master batch) obtained above was 0.1% by mass.

Using a vacuum heating press (IMC-11FD, manufactured by Imoto Machinery Co., Ltd.), the material obtained above was vacuum pressed at 250°C and a press thickness of 4 MPa, and then rapidly cooled in an ice bath to produce a molded article (film). During this process, the highly viscous fluid (polycarbonate resin) flowed from the inside to the outside, and the PBO fiber (X) were oriented in the direction of the fluid flow, i.e., the in-plane direction.

The breaking elongation, breaking energy, and coefficient of linear thermal expansion of the obtained molded article were measured. The results are shown in Table 2.

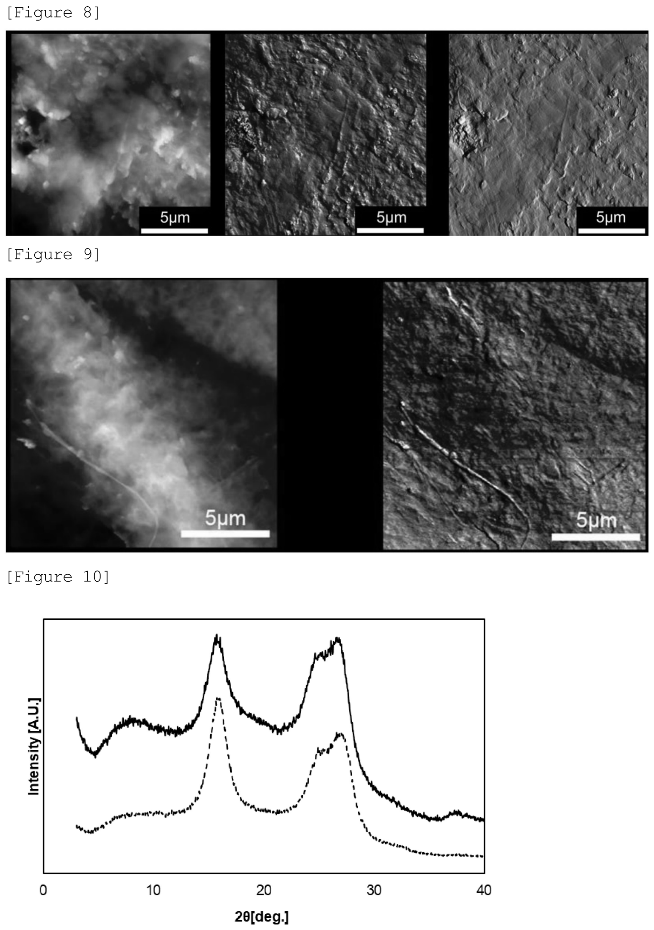

The obtained molded article was observed by scanning probe microscopy (SPM). The results are shown in Figure 8. From the left, Figure 8 shows a height image, a microdispersion image of changes in height, and a hardness image, and it can be seen that the PBO fiber (X) maintains a fibrous morphology and forms a dispersed state with their paths being connected (percolation) in the molded article. Since the PBO fiber (X) has a higher thermal conductivity than the polycarbonate resin, it is inferred that the formation of percolation makes it easier for heat to diffuse.

### <Method of measuring breaking elongation (%)>

A test piece (dumbbell-shaped (effective length 10 mm × 2 mm)) was prepared from the obtained molded article (film), and the breaking elongation (%) was measured at a tension rate of 4 mm/min using a tension and compression tester (SV-201NA model, manufactured by Imada-SS Corporation).

### <Method of measuring breaking energy (MJ/m³)>

The breaking energy (MJ/m³) was measured using the same method as the above <Method of measuring breaking elongation (%)>.

### <Method of measuring coefficient of linear thermal expansion (×10⁻⁵/K)>

A test piece (rectangle-shaped (effective length 10 mm × 5 mm)) was prepared from the obtained molded article (film), and the coefficient of linear thermal expansion (×10⁻⁵/K) was measured using a measuring device (DMA1 manufactured by METTLER TOLEDO) in accordance with the following measurement conditions.

### -Measurement conditions-

| | |
|---|---|
| Load (N): | 0.1 |
| Heating rate (°C/min): | 3 |
| Temperature range (°C): | 30 to 120 |

### Example 2

Example 2 was carried out in the same manner as Example 1, except that the concentration of the PBO fiber (X) was changed from 0.1% by mass to 0.3% by mass. The breaking elongation, breaking energy, and coefficient of linear thermal expansion of the obtained molded article were measured. The results are shown in Table 2.

### Comparative Example 1

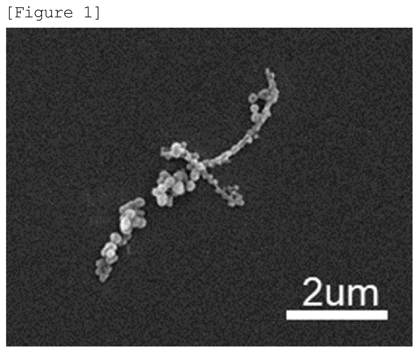

Comparative Example 1 was carried out in the same manner as Example 1, except that in the <Production of the PBO fiber (X)>, the step of filtering the aqueous dispersion after ultrasonic irradiation by using a membrane filter (diameter 1.0 µm) was omitted. An example of the obtained fibers is shown in the photograph in FIG. 1. Further, the analysis results of the obtained fibers are shown in Table 1 and Figures 4 to 7. The breaking elongation, breaking energy, and coefficient of linear thermal expansion of the obtained molded article were measured. The results are shown in Table 2.

### Comparative Example 2

Comparative Example 2 was carried out in the same manner as Example 2, except that in the <Production of the PBO fiber (X)>, the step of filtering the aqueous dispersion after ultrasonic irradiation by using a membrane filter (diameter 1.0 µm) was omitted. The breaking elongation, breaking energy, and coefficient of linear thermal expansion of the obtained molded article were measured. The results are shown in Table 2.

### Comparative Example 3

Comparative Example 3 was carried out in the same manner as Example 1, except that the aqueous dispersion of the PBO fiber (X) was mixed with the polycarbonate resin without producing a composite material. The breaking elongation, breaking energy, and coefficient of linear thermal expansion of the obtained molded article were measured. The results are shown in Table 2.

**[Table 1]**

| | Width (nm) | ΔW (nm) | Length (µm) | Aspect ratio |
|---|---|---|---|---|
| Example 1 | 100±20 | 13±12 | 2.8±0.9 | 29.7±11.3 |
| Comparative Example 1 | 116±40 | 50±38 | 3.6±2.0 | 31.6±16.7 |

**[Table 2]**

| Film | Breaking elongation | Breaking energy | Coefficient of linear thermal expansion |
|---|---|---|---|
| | (%) | (MJ/m³) | (×10⁻⁵ /K) |
| Example 1 | 45.5±10.9 | 106±50 | 8.1 |
| Example 2 | 44.6±8.3 | 98.3±44.5 | 7.6 |
| Comparative Example 1 | 16.4±8.2 | 5.0±2.1 | 18.2 |
| Comparative Example 2 | 32.8±23.5 | 13.6±10.2 | 15.4 |
| Comparative Example 3 | 21.0±12.0 | 6.8±4.5 | 23.4 |

The molded article of the present invention had a small coefficient of thermal expansion. In addition, the molded article of the present invention had a high breaking elongation and high breaking energy.

### Example 3

### <Production of molded article of epoxy resin/PBO fiber (X)>

The PBO fiber (X) obtained in the above <Production of the PBO fiber (X)> was added to ethyl methyl ketone (MEK) so that the concentration of the PBO fiber (X) was 0.2% by mass, and the mixture was dispersed by irradiating with ultrasonic waves (frequency 28 kHz). A liquid epoxy resin (Mitsubishi Chemical Corporation, product number: JER828) was added to the dispersion to adjust the mass of the PBO fiber (X) to the proportion shown in Table 3 relative to 1 part by mass of the liquid epoxy resin. The resultant mixture was irradiated with ultrasonic waves (frequency 28 kHz) and then further stirred to perform dispersion and defoaming. 2-Ethyl-4-methylimidazole was added to the dispersion in which the epoxy resin was dissolved in an amount of 5% by mass relative to the epoxy resin, and the resultant mixture was irradiated with ultrasonic waves (frequency 28 kHz), then stirred and defoamed for 1.5 minutes at 2200 rpm using an Awatori Rentaro mixer. The defoamed dispersion was concentrated by distilling off the MEK at 50°C under a nitrogen flow. The mixture was then defoamed for 1.5 minutes at 2200 rpm using an Awatori Rentaro mixer, and left to stand for 12 hours. The concentrated dispersion was then dried by holding it at 80°C for 1 hour without pressure using a vacuum heating press (IMC-11FD manufactured by Imoto Machinery Co., Ltd.), and then vacuum pressed at 120°C for 2 hours at a press thickness of 4 MPa to produce a molded article (film). At this time, the highly viscous fluid (epoxy resin) flowed from the inside to the outside, and the PBO fiber (X) were oriented in the direction in which the fluid flowed, i.e., the in-plane direction.

The obtained molded article was observed by scanning probe microscopy (SPM). The results are shown in Figure 9.

From the left, Figure 9 shows a height image and a hardness image, and it can be seen that the PBO fiber (X) maintains a fibrous morphology and forms a dispersed state with their paths being connected (percolation) in the molded article. Since the PBO fiber (X) has a higher thermal conductivity than the epoxy resin, it is inferred that the formation of percolation makes it easier for heat to diffuse.

The breaking elongation, breaking energy, and coefficient of linear thermal expansion of the obtained molded article (film) were measured in the same manner as in Example 1. The results are shown in Table 3.

Further, the breaking strength and thermal diffusivity were evaluated as follows, and the results are shown in Table 3.

### <Breaking strength>

A test piece (dumbbell-shaped (effective length 10 mm × 2 mm)) was prepared from the obtained molded article (film), and the breaking strength (MPa) was measured at a tension rate of 4 mm/min using a tension and compression tester (SV-201NA model, manufactured by Imada-SS Corporation).

### <Thermal diffusivity (in-plane direction)>

A rectangular test piece was prepared by cutting 5 mm × 20 mm (test area 5 mm × 10 mm) from the obtained molded article (film), then blackened using a carbon spray, and measured using a thermal property measuring device (Thermowave Analyzer TA-LT, manufactured by BETHEL) .

### Example 4

Example 4 was carried out in the same manner as Example 3, except that the amount of the PBO fiber (X) obtained in the above <Production of the PBO fiber (X)> was changed to the amount shown in Table 3 relative to 1 part by mass of epoxy resin. The breaking strength, breaking elongation, breaking energy, thermal diffusivity, and coefficient of linear thermal expansion of the obtained molded article were measured. The results are shown in Table 3.

### Comparative Example 4

Comparative Example 4 was carried out in the same manner as Example 3, except that the PBO fiber (X) were not added. The breaking strength, breaking elongation, breaking energy, thermal diffusivity, and coefficient of linear thermal expansion of the obtained molded article were measured. The results are shown in Table 3.

### Comparative Example 5

Comparative Example 5 was carried out in the same manner as Example 3, except that the PBO fiber obtained in Comparative Example 1 were used instead of the PBO fiber (X) obtained in the above <Production of the PBO fiber (X)>. The breaking strength, breaking elongation, breaking energy, thermal diffusivity, and coefficient of linear thermal expansion of the obtained molded article were measured. The results are shown in Table 3.

### Comparative Example 6

Comparative Example 6 was carried out in the same manner as Example 4, except that the PBO fiber obtained in Comparative Example 1 were used instead of the PBO fiber (X) obtained in the above <Production of the PBO fiber (X)>. The breaking strength, breaking elongation, breaking energy, thermal diffusivity, and coefficient of linear thermal expansion of the obtained molded article were measured. The results are shown in Table 3.

**[Table 3]**

| Film | Amount of PBO fibers added (parts by mass) | Breaking strength | Breaking elongation | Breaking energy | Thermal diffusivity | Coefficient of linear thermal expansion |
|---|---|---|---|---|---|---|
| | | (MPa) | (%) | (MJ/m³) | (×10⁻⁷m²/s) | (×10⁻⁵ /K) |
| Example 3 | 0.001 | 39.5±14.2 | 20.4±6.1 | 4.1 ±2.5 | 3.93 | 21.9 |
| Example 4 | 0.005 | 44.2±7.7 | 17.6±3.9 | 4.2±1.8 | 4.94 | 22.1 |
| Comparative Example 4 | Not added | 28.3±17.0 | 12.4±8.0 | 2.1 ±2.2 | 3.56 | 23.4 |
| Comparative Example 5 | 0.001 | 29.4±15.9 | 10.2±1.9 | 2.0±1.9 | 3.65 | 24.4 |
| Comparative Example 6 | 0.005 | 28.3±87.6 | 9.3±2.9 | 1.8±0.6 | 4.71 | 24.3 |

As can be seen from the above results, the molded article of the present invention had better breaking strength, breaking elongation, breaking energy, thermal diffusivity, and coefficient of linear thermal expansion.

### Example 5

A mat was molded using the PBO fiber (X).

Specifically, the PBO fiber (X) obtained in Example 1 was added to distilled water to prepare a suspension of the PBO fiber (X) (concentration of the PBO fiber (X) was 0.1% by mass). The resultant suspension was homogenized, subjected to an ultrasonic treatment (frequency 28 kHz), and then the suspension of the PBO fiber (X) was filtered under reduced pressure using a membrane filter (pore size 0.4 µm). A mat of the PBO fiber (X) was produced by pressing a laminated product of the filtered PBO fiber (X) using a vacuum heating press (IMC-11FD, manufactured by Imoto Machinery Co., Ltd.) at 60°C, a press pressure of 10 MPa, and a press time of 1 hour. The physical properties of the mat of the PBO fiber (X) were evaluated by measuring the X-ray diffraction and thermal diffusivity of the produced mat of the PBO fiber (X).

Figure 10 shows the results of X-ray diffraction measurements when X-rays are incident from the plane direction of the mat of the PBO fiber (X). In Figure 10, (a) indicates the peak in the in-plane direction, and (b) indicates the peak in the thickness direction.

Since peaks for the PBO (001) and (005) planes were observed only in the reflection in the plane direction of the mat, it was found that the PBO fiber (X) were oriented in the plane direction in the mat of the PBO fiber (X).

The thermal diffusivity (in-plane direction, thickness direction) of the obtained mat was measured using the same method as in Example 3. In addition, the thermal conductivity was calculated using the specific heat determined using differential scanning calorimetry (Thermo Plus EV2 DSC vesta, manufactured by RIGAKU). The results are shown in Table 4.

### Comparative Example 7

A fiber mat was produced in the same manner as in Example 5, except that the PBO fiber obtained in Comparative Example 1 were used instead of the PBO fiber (X) obtained in the above <Production of the PBO fiber (X)>. The results of measuring the thermal diffusivity and thermal conductivity of the obtained fiber mat are shown in Table 4.

**[Table 4]**

| | Thermal diffusivity | | Thermal conductivity | |
|---|---|---|---|---|
| | (×10⁻⁶ m²/s) | | (W/m·K) | |
| | Thickness direction | In-plane direction | Thickness direction | In-plane direction |
| Example 5 | 0.332 | 2.47 | 0.537 | 4.00 |
| Comparative Example 7 | 0.329 | 3.17 | 0.684 | 6.61 |

It can be seen from the results in Table 4 above that the mat of the PBO fiber (X) obtained in Example 5 had better density and better thermal diffusivity in the in-plane direction of the mat than the mat of fibers obtained in Comparative Example 7. Therefore, the thermal conductivity in the in-plane direction of the mat of the PBO fiber (X) obtained in Example 5 was about 1.5 times better than the mat of fibers obtained in Comparative Example 7. The mat of fibers obtained in Comparative Example 7 contains a mixture of PBO fibers and attached matter, whereas the mat of the PBO fiber (X) obtained in Example 5 contains only linear PBO fibers (X) densely oriented in-plane, which is thought to have improved the thermal conductivity of the mat of the PBO fiber (X) in the in-plane direction.

### Reference Signs List

- 1: PBO aggregate
- 2: particles
- 3: PBO fiber (X)

## Claims

1. A molded article formed from a composition comprising a resin and a poly(p-phenylene benzobisoxazole) fiber (X), wherein a proportion of the fiber (X) relative to 100% by mass of poly(p-phenylene benzobisoxazole) contained in the composition is 50% by mass or more.

2. The molded article according to claim 1, wherein a difference (ΔW) between a maximum fiber width and a minimum fiber width of the fiber (X) is 35 nm or less.

3. The molded article according to claim 1, wherein a difference (ΔW) between a maximum fiber width and a minimum fiber width of the fiber (X) is 30 nm or less.

4. The molded article according to any one of claims 1 to 3, wherein the proportion of the fiber (X) relative to 100% by mass of poly(p-phenylene benzobisoxazole) contained in the composition is 80% by mass or more.

5. The molded article according to any one of claims 1 to 3, wherein the composition comprises from 0.01 to 30 parts by mass of the fiber (X) relative to 100 parts by mass of the resin.

6. The molded article according to any one of claims 1 to 3, wherein the molded article is a film.

7. The molded article according to claim 6, wherein the fiber (X) is oriented in an in-plane direction of the film.

8. The molded article according to claim 1, wherein
a difference (ΔW) between a maximum fiber width and a minimum fiber width of the fiber (X) is 30 nm or less,
the proportion of the fiber (X) relative to 100% by mass of poly(p-phenylene benzobisoxazole) contained in the molded article is 80% by mass or more,
the composition comprises from 0.01 to 30 parts by mass of the fiber (X) relative to 100 parts by mass of the resin,
the molded article is a film, and
the fiber (X) is oriented in an in-plane direction of the film.

9. A composite material comprising a poly(p-phenylene benzobisoxazole) fiber (X) and a resin that covers all or a part of the fiber (X), wherein
a proportion of the fiber (X) relative to 100% by mass of poly(p-phenylene benzobisoxazole) contained in the composite material is 50% by mass or more.

10. The composite material according to claim 9, wherein a difference (ΔW) between a maximum fiber width and a minimum fiber width of the fiber (X) is 35 nm or less.

11. The composite material according to claim 9, wherein a difference (ΔW) between a maximum fiber width and a minimum fiber width of the fiber (X) is 30 nm or less.

12. The composite material according to any one of claims 9 to 11, wherein the proportion of the fiber (X) relative to 100% by mass of poly(p-phenylene benzobisoxazole) contained in the composite material is 80% by mass or more.

13. The composite material according to any one of claims 9 to 11, wherein the composite material comprises from 100 to 9900 parts of the resin relative to 100 parts by mass of the fiber (X).

14. The composite material according to claim 9, wherein
a difference (ΔW) between a maximum fiber width and a minimum fiber width of the fiber (X) is 30 nm or less,
the proportion of the fiber (X) relative to 100% by mass of poly(p-phenylene benzobisoxazole) contained in the composite material is 80% by mass or more, and
the composite material comprises from 100 to 9900 parts of the resin relative to 100 parts by mass of the fiber (X).

15. A method for producing a composite material according to any one of claims 9 to 11 and 14, comprising:
a step of ultrasonically treating a poly(p-phenylene benzobisoxazole) aggregate in a solvent;
a step of separating a poly(p-phenylene benzobisoxazole) fiber (X) from the ultrasonically treated liquid to obtain a dispersion of the poly(p-phenylene benzobisoxazole) fiber (X);
a step of mixing the dispersion with a resin to obtain a mixed liquid containing the poly(p-phenylene benzobisoxazole) fiber (X), the resin, and the solvent; and
a step of removing the solvent from the mixed liquid.

16. The method for producing a composite material according to claim 15, wherein a content of the resin in 100% by mass of the mixed liquid is from 0.05 to 50% by mass.

17. A method for producing a molded article, comprising:
a step of ultrasonically treating a poly(p-phenylene benzobisoxazole) aggregate in a solvent;
a step of separating a poly(p-phenylene benzobisoxazole) fiber (X) from the ultrasonically treated liquid to obtain a dispersion of the poly(p-phenylene benzobisoxazole) fiber (X);
a step of mixing the dispersion with a thermosetting resin to obtain a mixed liquid containing the poly(p-phenylene benzobisoxazole) fiber (X), the thermosetting resin, and the solvent;
a step of removing the solvent from the mixed liquid; and
a step of curing the thermosetting resin.

18. The method for producing a molded article according to claim 17, wherein the thermosetting resin is soluble in the solvent contained in the dispersion at 23°C.

19. A mat formed by using poly(p-phenylene benzobisoxazole) comprising a poly(p-phenylene benzobisoxazole) fiber (X),
wherein a proportion of the fiber (X) relative to 100% by mass of poly(p-phenylene benzobisoxazole) contained in the mat is 50% by mass or more.

20. The mat according to claim 19, wherein a difference (ΔW) between a maximum fiber width and a minimum fiber width of the fiber (X) is 35 nm or less.

21. The mat according to claim 19, wherein a difference (ΔW) between a maximum fiber width and a minimum fiber width of the fiber (X) is 30 nm or less.

22. The mat according to any one of claims 19 to 21, wherein the proportion of the fiber (X) relative to 100% by mass of poly(p-phenylene benzobisoxazole) contained in the mat is 80% by mass or more.
